# EUROPEAN PATENT APPLICATION

(11) **EP 4 494 808 A1**
(43) Date of publication of application: **22.01.2025**
(21) Application number: 23186928.0
(22) Date of filing: 21.07.2023
(51) Int. Cl.: B23Q 3/155, B23B 31/06, B23B 31/107

(54) **TOOL HOLDER FOR RECEIVING AND FASTENING TOOL SHANK ON TOOL MAGAZINE AND METHOD OF RELEASING TOOL SHANK**

(71) Applicant: Sanjet International Co., Ltd., Daya Dist. Taichung City 428 (TW)
(72) Inventor: CHANG, CHING-SAN, 428 Taichung City (TW)
(74) Representative: Cabinet Chaillot

(57) **Abstract**

A tool holder (100) for receiving and fastening a tool shank (200) on a tool magazine and a method of releasing the tool shank (200) are provided. The tool holder (100) includes a socket (10) adapted to receive the tool shank (200), and a tool fastening assembly (20) having a sliding tube (21, 21A) and at least one fastening member (22). The sliding tube (21, 21A) is movably disposed in the socket (10) and has at least one side opening (212). A hole wall of the at least one side opening (212) is constituted of a first surface (212a) and a second surface (212b) that have different slopes. When the at least one fastening member (22) is in contact with the first surface (212a), the tool shank (200) is fastened. When an external force (F) is applied to the sliding tube (21, 21A), the sliding tube (21, 21A) is moved, so that the tool shank (200) is released when the second surface (212b) is in contact with the at least one fastening member (22).

## Description

### BACKGROUND OF THE INVENTION

### Technical Field

The present invention relates generally to a structure for receiving a tool shank on a tool magazine of a machine tool, and more particularly to a tool holder for receiving and fastening a tool shank on a tool magazine, and a method of releasing the tool shank.

### Description of Related Art

A tool magazine system of a machine tool is a device that provides tool storage and tool changing required in an automated machining process. A common tool magazine system typically is a drum-type tool magazine or a chain-type tool magazine. The aforementioned tool magazine has a plurality of sockets being inserted by a tool shank with tools in different specifications. In order to stabilize the tool shank and prevent the tool shank from improperly loosening from the socket that causes damages to the tool shank and the tool or causes work safety problems, a locking structure is disposed inside the socket, such as Taiwan Utility Patent No. M477934 "SOCKET DEVICE" and Taiwan Utility Patent No. M439538 "IMPROVED SOCKET OF TOOL MAGAZINE OF MACHINE TOOL". The locking structure of the aforementioned patents is constituted of a plurality of springs and a plurality of steel balls, wherein an elastic force each of the springs pushes one of the steel balls to force each of the steel balls to urge an end of the tool shank inserted into the socket, so that a blocking effect is generated, thereby preventing the tool shank from loosening improperly. However, in order to enhance the effect of the tool shank being firmly inserted in the socket, the conventional locking structure usually uses a spring with a high material rigidity to increase a force of the steel ball urging the tool shank. As a result, when a user withdraws the tool shank from the socket and holds the tool with one hand, the user is required to apply a larger pulling force to overcome the elastic force of the spring. As a result, the hands of the user might be scratched by a blade of the tool, and injury might be caused due to improper control of the force of withdrawing the tool. In this case, the user will use an auxiliary tool to insert into a gap between the tool shank and the socket during the process of withdrawing the tool and then force the tool shank to separate from the socket by pulling. However, the aforementioned way increases the inconvenience of the operation.

### BRIEF SUMMARY OF THE INVENTION

In view of the above, the primary objective of the present invention is to provide a tool holder for receiving and fastening a tool shank on a tool magazine and a method of releasing the tool shank, which have the effect of improving the stability of the tool shank after being inserted and easily withdrawing the tool shank.

The present invention provides a tool holder for receiving and fastening a tool shank on a tool magazine and a method of releasing the tool shank. The tool holder includes a socket and a tool fastening assembly. The socket has an axial hole, at least one through hole, and a tool receiving space adapted to receive the tool shank. The axial hole axially communicates with the tool receiving space. The at least one through hole radially communicates with the axial hole. An axis passing through the tool receiving space and a center of the axial hole is defined. The tool fastening assembly includes a sliding tube and at least one fastening member. The sliding tube is disposed in the axial hole and is movable between a first position and a second position in the axis. The sliding tube has at least one side opening, wherein a hole wall of the at least one side opening includes a first surface and a second surface. A virtual line parallel to the axis is defined. A first extension line extending outward from the first surface is defined, and a first angle is formed between the first extension line and the virtual line. A second extension line extending outward from the second surface is defined, and a second angle is formed between the second extension line and the virtual line. The first angle is greater than the second angle. The at least one fastening member is movably disposed in the at least one through hole of the socket. When the sliding tube is located at the first position, the at least one fastening member is in contact with the first surface of the sliding tube, and the tool shank is fastened and is located in the tool receiving space. When the sliding tube is located at the second position, the at least one fastening member is in contact with the second surface of the sliding tube, and the tool shank is released and is configured to be withdrawn from the tool receiving space.

The method of releasing the tool shank includes: applying an external force to the sliding tube to cause the sliding tube to move from the first position to the second position, wherein the second surface of the sliding tube pushes the at least one fastening member radially outward; withdrawing the tool shank relative to the tool holder; and removing the external force to cause the sliding tube to return from the second position to the first position.

With the aforementioned design, the side opening of the sliding tube has the first surface and the second surface that have different slopes, so that the present invention could achieve the purpose of stably fastening and easily releasing the tool shank.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is an exploded view of the tool holder and the tool shank according to an embodiment of the present invention;
FIG. 2 is a perspective view of the tool holder according to the embodiment of the present invention;
FIG. 3 is a side view of FIG. 2;
FIG. 4 is a sectional view along the 4-4 line in FIG. 3;
FIG. 5 is a perspective view of the sliding tube of the tool holder according to the embodiment of the present invention;
FIG. 6 is a side view of FIG. 5.
FIG. 7 is a sectional view along the 7-7 line in FIG. 6;
FIG. 8 is a sectional view along the 8-8 line in FIG. 6;
FIG. 9 is a sectional view along the 9-9 line in FIG. 7;
FIG. 10 is a schematic view, showing the tool holder in FIG. 1 fastening the tool shank;
FIG. 11 is a sectional view along the 11-11 line in FIG. 10;
FIG. 12 is a sectional view along the 12-12 line in FIG. 11, showing a portion of the tool holder and a portion of the tool shank being partially enlarged;
FIG. 13 is a schematic view, showing the tool shank in FIG. 1 being at the released state on the tool holder;
FIG. 14 is a sectional view along the 14-14 line in FIG. 13;
FIG. 15 is a sectional view along the 15-15 line in FIG. 14, showing a portion of the tool holder and a portion of the tool shank being partially enlarged; and
FIG. 16 is similar to FIG. 15, showing that the body of the sliding tube of the tool holder according to another embodiment of the present invention has the restricting portion.

### DETAILED DESCRIPTION OF THE INVENTION

A tool holder 100 according to an embodiment of the present invention is applied to a tool magazine of a machine tool and is adapted to receive and fasten a tool shank 200. The aforementioned tool magazine could be a drum-type tool magazine or a chain-type tool magazine. The tool shank 200 is adapted to be engaged with a tool for processing.

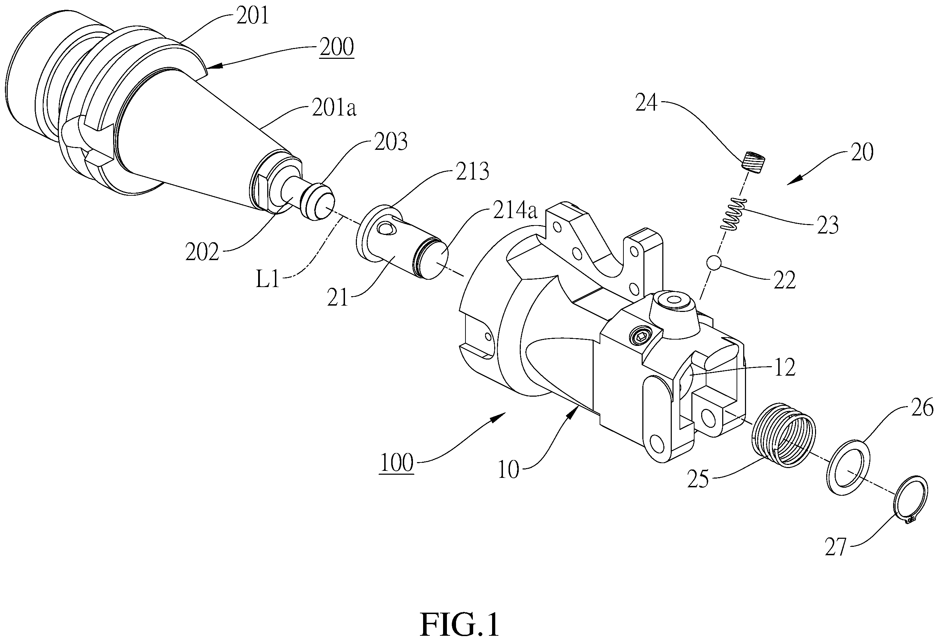

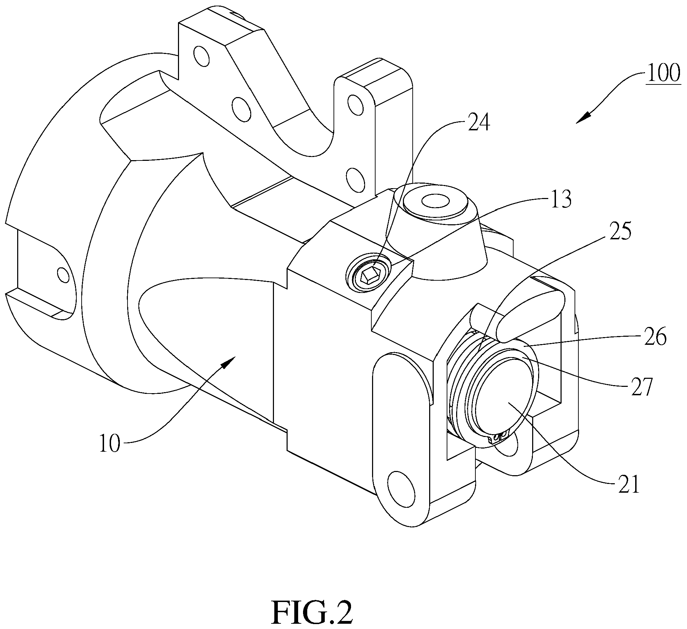

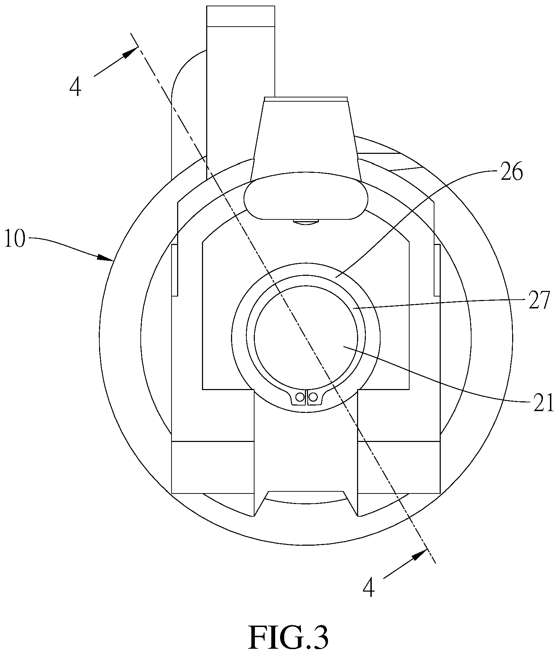

As shown in FIG. 1, the tool holder 100 according to the embodiment of the present invention includes a socket 10 and a tool fastening assembly 20. The socket 10 is adapted to receive a tool shank 200. As shown in FIG. 2 to FIG. 4, the socket 10 has a front end 10a, a rear end 10b, and a tapered hole 11 formed by recessing into the front end 10a. A hole wall of the tapered hole 11 surrounds to form a tool receiving space S. The socket 10 has an axial hole 12 located near the rear end 10b and axially communicating with the tool receiving space S. An axis L1 passing through the tool receiving space S and a center of the axial hole 12 is defined. In addition, the socket 10 further has at least one through hole 13 radially communicating with the axial hole 12. In the current embodiment, the number of the at least one through hole 13 is four as an example. In other embodiments, the number of the at least one through hole 13 could be increased or decreased based on the requirements, and is not limited to even numbers. In addition, a shoulder portion 14 is formed inside the socket 10 at a joint between the tool receiving space S and the axial hole 12. A surface of the shoulder portion 14 forms a first abutting surface 15, and an outside surface of the socket 10 forms a second abutting surface 16. The first abutting surface 15 and the second abutting surface 16 are respectively located on two sides of the through holes 13 and are opposite to each other.

In the current embodiment, the tool fastening assembly 20 includes a sliding tube 21, at least one fastening member 22, at least one pushing member 23, at least one closing member 24, at least one elastic member 25, a gasket 26, and a C-shaped retaining ring 27.

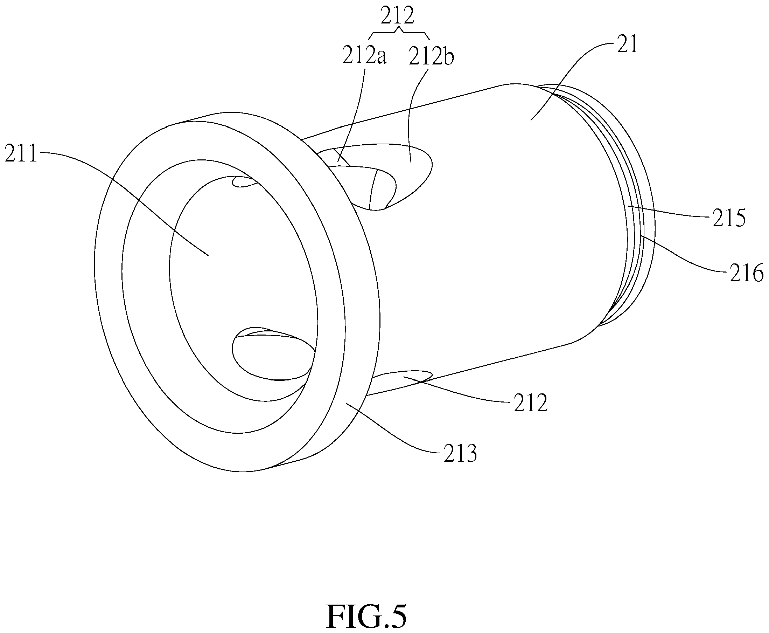

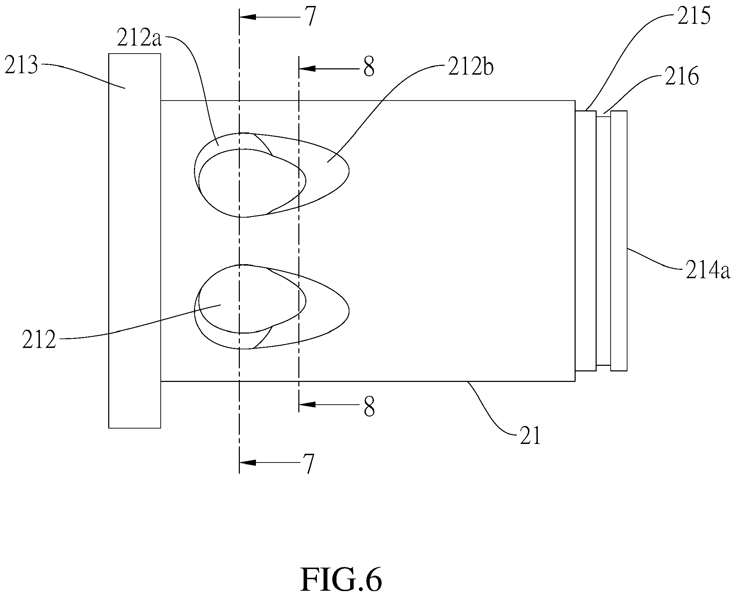

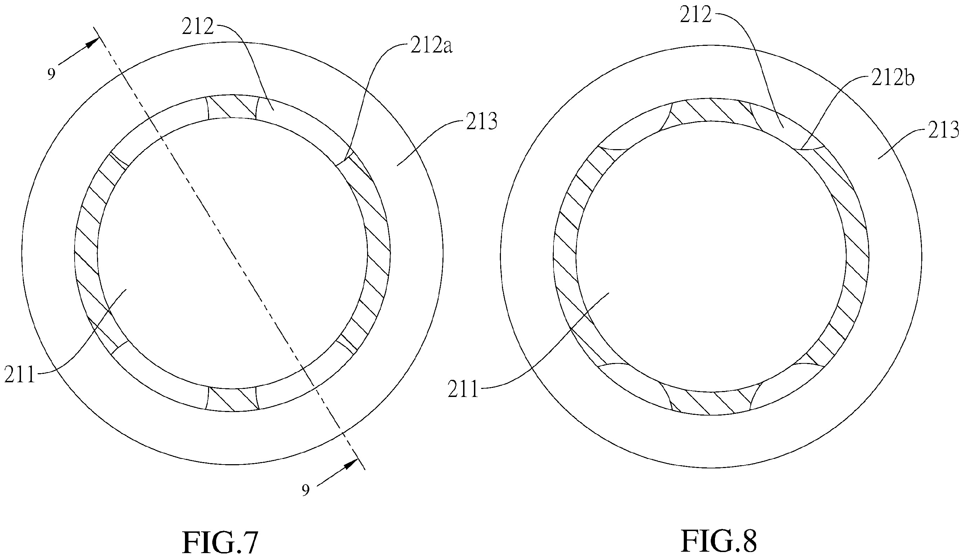

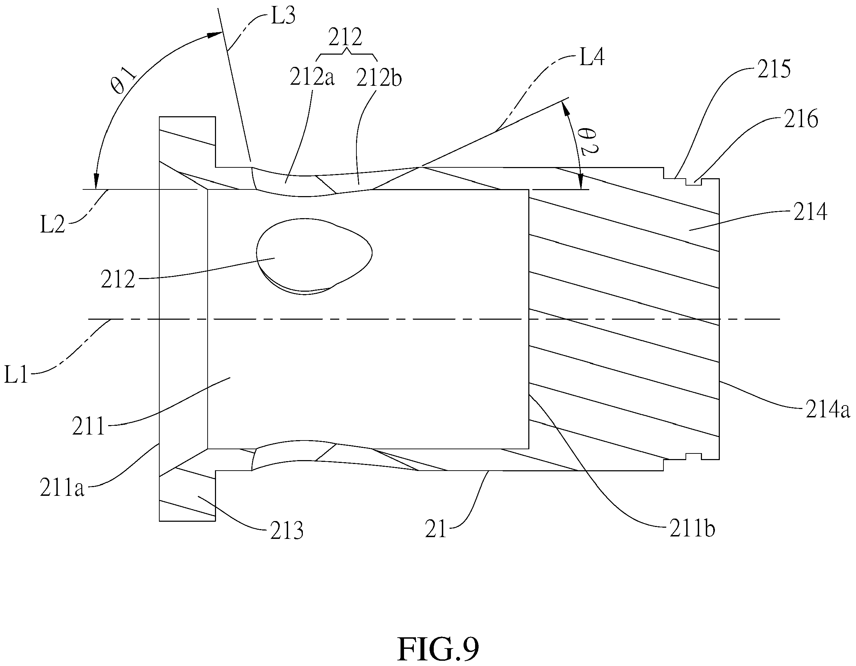

As shown in FIG. 5 to FIG. 9, the sliding tube 21 is a cylinder having a counterbore 211 and at least one side opening 212. Two ends of the counterbore 211 are respectively an open end 211a and a closed end 211b. The at least one side opening 212 communicates with the counterbore 211. The sliding tube 21 has a first blocking portion 213 extending radially outward from a periphery of the open end 211a. The sliding tube 21 has a solid portion 214 located on a side of the closed end 211b of the counterbore 211. An outer peripheral surface of the sliding tube 21 corresponding to the solid portion 214 is recessed to form a step surface 215 and a groove 216. In the current embodiment, the number of the at least one side opening 212 t is the same as the number of the at least one through hole 13 and is arranged near the first blocking portion 213. A hole wall of the at least one side opening 212 is formed by processing with a ball end mill to have a first surface 212a and a second surface 212b. As shown in FIG. 7 and FIG. 8, an opening width of a bottom of the side opening 212 corresponding to the first surface 212a is greater than an opening width of the bottom of the side opening 212 corresponding to the second surface 212b. As shown in FIG. 9, a virtual line L2 extending outward from a hole wall of the counterbore 211 and parallel to the axis L1 is defined. A first extension line L3 extending outward from the first surface 212a is defined, and a first angle θ1 is formed between the first extension line L3 and the virtual line L2. A second extension line L4 extending outward from the second surface 212b is defined, and a second angle θ2 is formed between the second extension line L4 and the virtual line L2. More specifically, the first extension line L3 passes through an intersection of the first surface 212a, an outer tube surface of the sliding tube 21, and the hole wall of the counterbore 211. The second extension line L4 passes through an intersection of the second surface 212b, the outer tube surface of the sliding tube 21, and the hole wall of the counterbore 211. The first angle θ1 is greater than the second angle θ2. Preferably, the first angle θ1 ranges between 45 degrees and 80 degrees, and the second angle θ2 ranges between 10 degrees and 40 degrees. In the current embodiment, the first surface 212a and the second surface 212 that face outward are obtained by controlling a lifting height and a moving path of the ball end mill, and the first angle θ1 is 77.88 degrees, and the second angle θ2 is 25 degrees. It can be seen from the sectional view shown in FIG. 9 that the first surface 212a is a curved surface having a R radius, and the second surface 212b is an inclined surface due to the influence of the controlled step-by-step lifting and moving path of the ball end mill. Additionally, in the current embodiment, the first surface 212a is a curved surface as an example. In practice, the first surface 212a could be an inclined surface made by controlling the lifting and moving path of the ball end mill.

The sliding tube 21 is disposed in the axial hole 12 and is movable in the axis L1, and the axis L1 passes through a center of the counterbore 211 at the same time. The sliding tube 21 abuts against the first abutting surface 15 through the first blocking portion 213, so that the sliding tube 21 could not be detached from the socket 10 through the rear end 10b of the socket 10.

The at least one fastening member 22 is movably disposed in the at least one through hole 13 of the socket 10. In the current embodiment, the at least one fastening member 22 is constituted of a steel ball, and the number of the at least one fastening member 22 is the same as the number of the at least one through hole 13, wherein each of the fastening members 22 is placed in one of the through holes 13. The at least one pushing member 23 is disposed in the at least one through hole 13 of the socket 10, and the number of the at least one pushing member 23 is the same as the number of the at least one fastening member 22, wherein each of the pushing members 23 is placed in one of the through holes 13. In the current embodiment, the pushing member 23 is a coil spring. The at least one closing member 24 covers the at least one through hole 13 of the socket 10 and is adapted to prevent the at least one fastening member 22 and the at least one pushing member 23 from inappropriately falling out of the at least one through hole 13. In the current embodiment, the at least one closing member 24 is a set screw, and a screw hole 13a is formed on a top portion of the through hole 13, so that the at least one closing member 24 could be engaged with or detached from the socket 10 by screwing in or unscrewing relative to the screw hole 13a.

In the current embodiment, the number of the at least one fastening member 22, the number of the at least one pushing member 23, and the number of the at least one closing member 24 respectively are plural as an example. but the actual number of the aforementioned components used could be increased or decreased depending on the demand. In order to illustrate easily, one of the through holes 13 and the corresponding fastening member 22, the corresponding pushing member 23, and the corresponding closing member 24 are used for illustration. After the fastening member 22, the pushing member 23, and the closing member 24 are installed, the closure member 24 keeps the fastening member 22 and the pushing member 23 locating in the through hole 13. Two ends of the pushing member 23 respectively abut against the fastening member 22 and the closing member 24, wherein an elastic force of the pushing member 23 urges the fastening member 22 to keep moving toward a center of the sliding tube 21. A portion of the fastening member 22 is located in the through hole 13, and another portion of the fastening member 22 passes through the side opening 212 of the sliding tube 21 to be exposed in the counterbore 211. The another portion of the fastening member 22 passing through the side opening 212 and exposed in the counterbore 211 is defined as a curved protrusion 22a. The fastening member 22 is in contact with the first surface 212a or the second surface 212b through the curved protrusion 22a. As the fastening member 22 in the current embodiment is a steel ball, the curved protrusion 22a is a part of the steel ball. However, in other embodiments, the fastening member 22 could be constituted of a hemispherical head connected to a shaft; at that time, the hemispherical head constitutes the curved protrusion 22a. When the fastening member 22 is a steel ball as an example, a diameter of the steel ball affects the design of the R radius of the first surface 212a, i.e., the R radius could not be less than half of the diameter of the steel ball, and the R radius at least is greater than or equal to a radius of the steel ball. When the sliding tube 21 is applied to the field of the tool holder of the machine tool, the R radius of the first surface 212a of the sliding tube 21 ranges, preferably, between 2 mm and 7 mm. In the current embodiment, the diameter of the steel ball is 9.5 mm, and the R radius of the first surface 212a is the radius of the steel ball, i.e., 4.75 mm. It must be noted that if the above-mentioned first surface 212a is used in structures with different specifications, the R radius is not limited to the range between 2 mm to 7 mm.

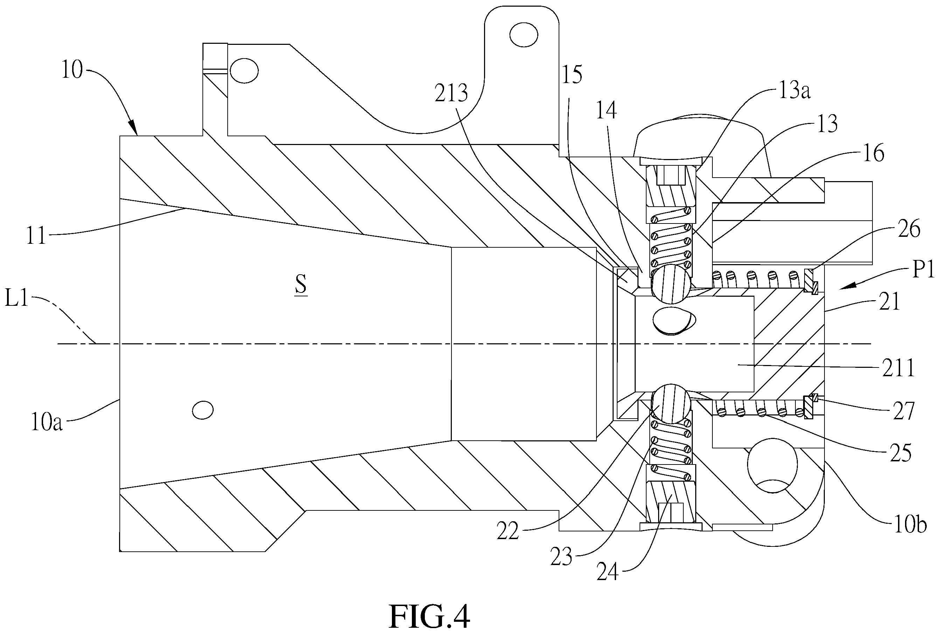

The purpose of disposing the at least one elastic member 25 is to urge the sliding tube 21 to keep moving in a predetermined direction through an elastic force of the at least one elastic member 25. In the current embodiment, the at least one elastic member 25 is a coil spring and fits around an outside of an end of the sliding tube 21 passing out of the axial hole 12 of the socket 10. The gasket 26 fits around the step surface 215 to constitute a second blocking portion defined in the present invention. The C-shaped retaining ring 27 fits in the groove 216 and is adapted to restrict the gasket 26, so that the gasket 26 could not be loosened from the sliding tube 21. When an end of the at least one elastic member 25 abuts against the second abutting surface 16 and another end of the at least one elastic member 25 abuts against the gasket 26, the elastic force of the at least one elastic member 25 acts on the gasket 26, so that the sliding tube 21 is pushed outward. When the first blocking portion 213 of the sliding tube 21 abuts against the first abutting surface 15, the sliding tube 21 could no longer move outward, wherein it is defined that the sliding tube 21 at such state is located at a first position P1 (as shown in FIG. 4). At the same time, a portion of the curved protrusion 22a of the at least one fastening member 22 is in contact with the first surface 212a of the sliding tube 21. It can be seen from the above that, when the elastic member 25 is not subjected to a reverse compression force at a normal state, the elastic force of the at least one elastic member 25 urges the sliding tube 21 to keep moving toward the first position P1.

In the embodiment, the at least one elastic member 25 is a single spring that an inner diameter of the at least one elastic member 25 is larger than an outer diameter of the sliding tube 21 for conveniently fitting around the outside of the sliding tube 21 as an example. However, in other embodiments, the at least one elastic member 25 could be a plurality of springs having a smaller diameter and arranged around a periphery of the sliding tube 21, and similarly two ends of each of the springs respectively abut against the second abutting surface 16 and the gasket 26, which also achieve the purpose of urging the sliding tube 21 to move outward, but not limited thereto.

The above description is to illustrate the structure of the tool holder 100 according to the embodiment of the present invention. The following description illustrates how the tool holder 100 could stably fasten and easily release the tool shank 200 when being engaged with the tool shank 200. The tool shank 200 includes a body 201, a neck 202, and a pull stud 203. A front-end of the body 201 of the tool shank 200 is adapted to fix a tool (not shown). An outer diameter of the pull stud 203 is larger than an outer diameter of the neck 202. The tool shank 200 is engaged with the socket 10 by inserting an end of the tool shank 200 having the pull stud 203 into the tool receiving space S of the socket 10.

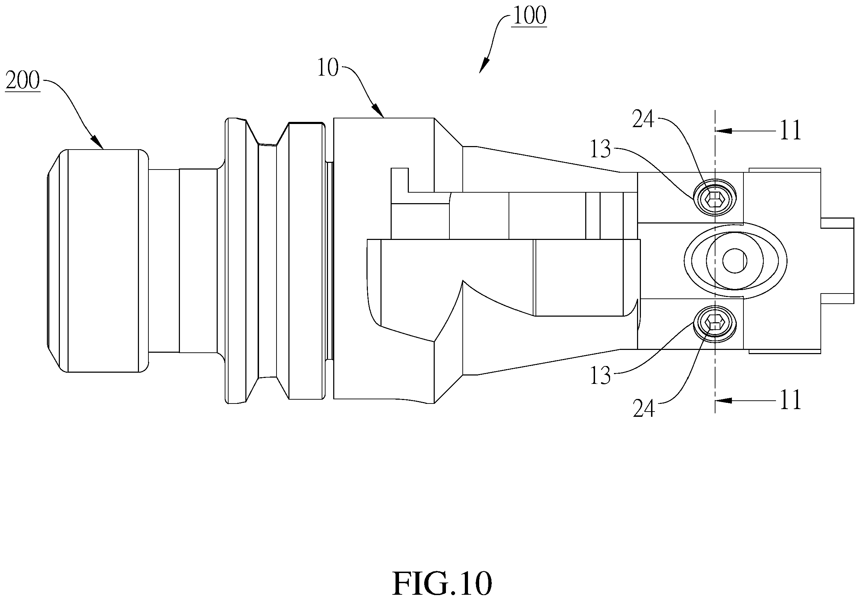

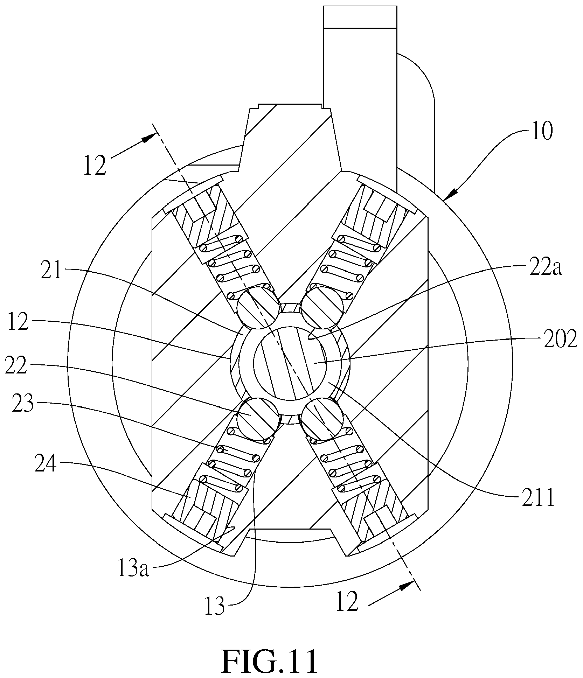

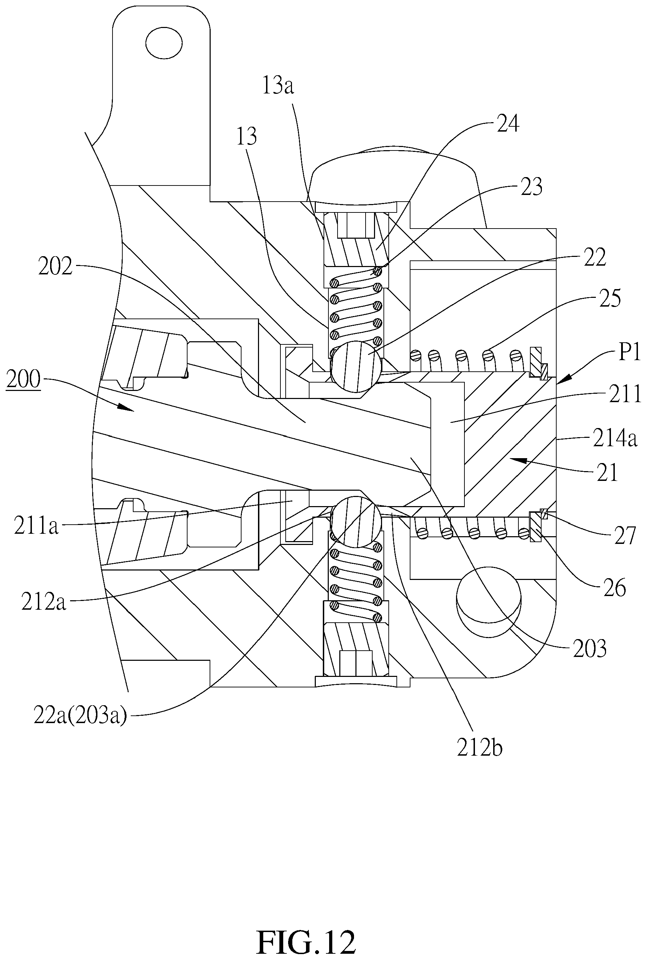

Referring to FIG. 1 and FIG. 10 to FIG. 12, the tool shank 200 is at a fastened state. At that time, a tapered portion 201a of the body 201 of the tool shank 200 is inserted into the tapered hole 11, and the pull stud 203 of the tool shank 200 passes through the open end 211a and protrudes into the counterbore 211 of the sliding tube 21. When the elastic member 25 is not subjected to the reverse compression force and is at a stretched state, the sliding tube 21 stops at the first position P1. At the same time, the fastening member 22 is pushed by the pushing member 23, and thus the curved protrusion 22a of the fastening member 22 is in contact with and located between the first surface 212a of the sliding tube 21 and an inclined surface 203a of the pull stud 203, so that the tool shank 200 is stably located in the tool receiving space S, thereby achieving the purpose of fastening the tool shank 200. It is worth mentioning that at the fastened state, the first surface 212a is in surface contact with the curved protrusion 22a of the fastening member 22 through a curved surface, so that the potential problem of being rapidly damaged due to excessive stress concentration in single-point contact. In addition, the second surface 212b is not in contact with the fastening member 22, or is only in contact with the fastening member 22 with a small area.

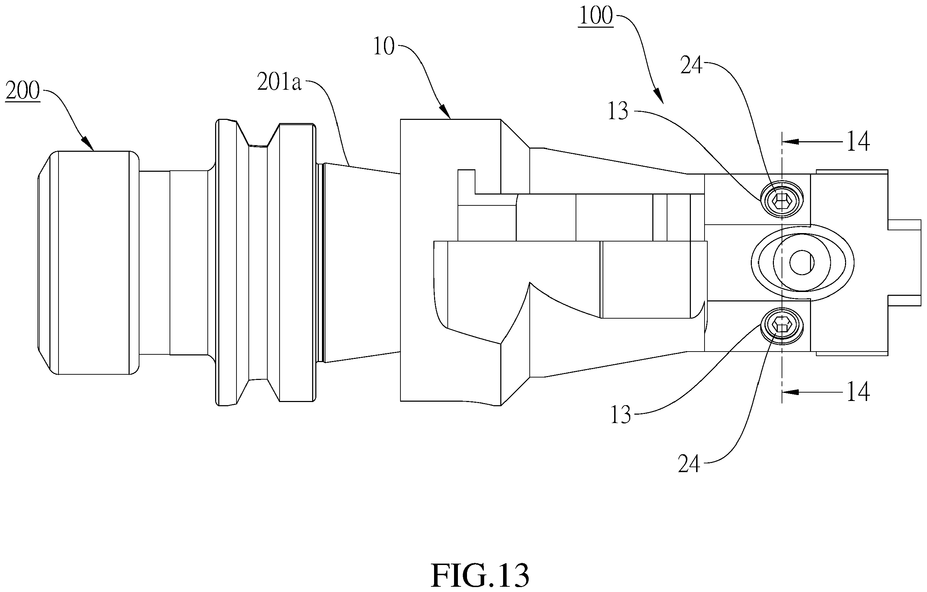

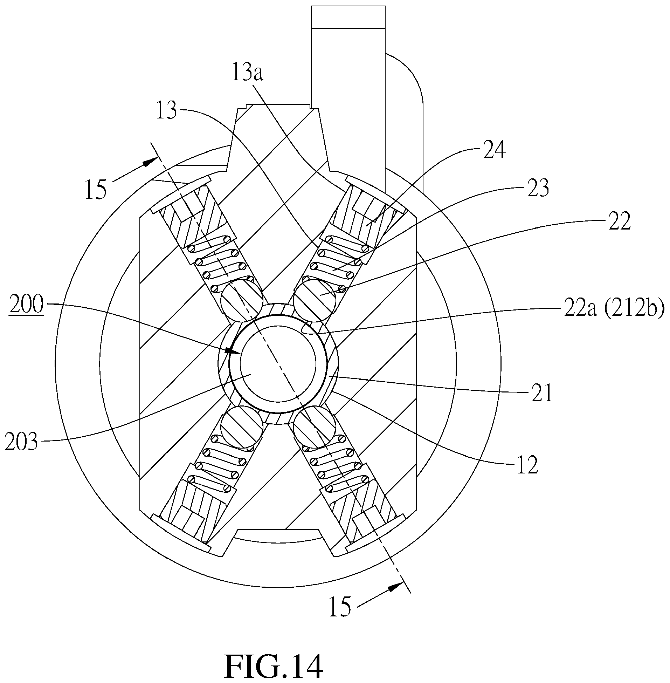

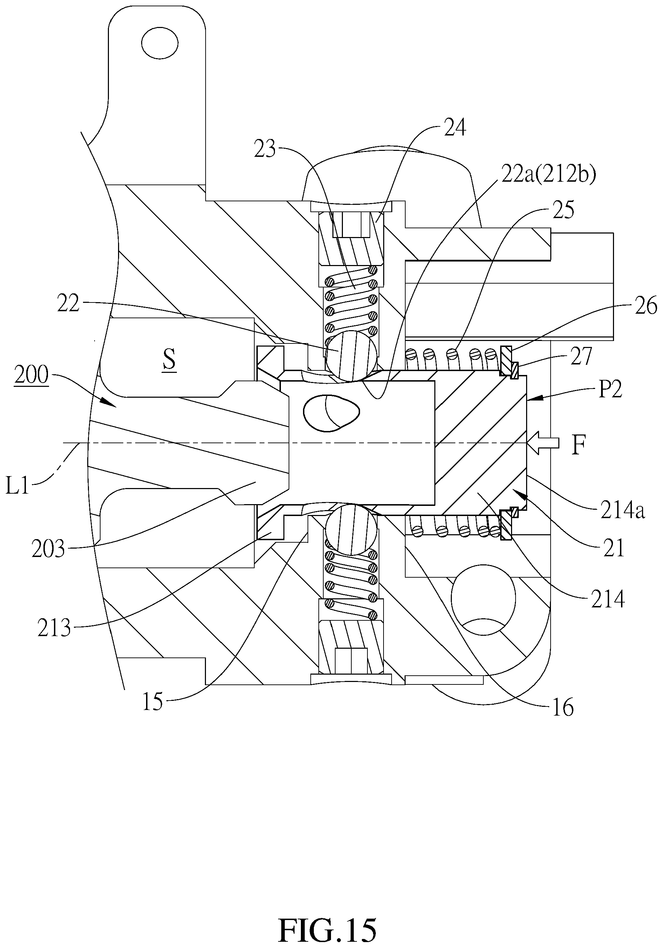

Referring to FIG. 13 to FIG. 15, when the tool shank 200 is about to be separated from the tool holder 100 and to be withdrawn, only an external force F is required to apply to the sliding tube 21 to cause the sliding tube 21 to move toward the tool receiving space S along the axis L1, and the fastening member 22 could be easily lifted and pushed radially outward through the second surface 212b having an inclination angle of 25 degrees, thereby forcing the fastening member 22 to leave a moving path of the pull stud 203. In this way, the tool shank 200 could be easily withdrawn, thereby achieving the purpose of easily releasing the tool shank 200. It is defined that when the fastening member 22 leaves the moving path of the pull stud 203, the sliding tube 21 is located at a second position P2 (shown in FIG. 15), i.e., when the sliding tube 21 is located at the second position P2, the elastic member 25 is compressed and the fastening member 22 is in contact with the second surface 212b of the sliding tube 21, so that the tool shank 200 is released and could be withdrawn from the tool receiving space S. The external force F could be generated by manually pressing, or a pushing device (not shown) installed at a specific position of the machine tool behind the tool holder. The pushing device drives a push rod to protrude forward and to push an end surface 214a of the solid portion 214 of the sliding tube 21 by controlling a change of air pressure or hydraulic pressure, so that the purpose of pushing the sliding tube 21 toward the tool receiving space S could be achieved. In addition, the solid portion 214 of the sliding tube 21 is a solid structure, so that the solid portion 214 could withstand repeated pushes by the external force F without deformation. Preferably, the solid portion 214 could be heat-treated or surface-hardened in advance, thereby improving the impact strength or the wear resistance of the solid portion 214.

While the fastening member 22 is forced to move outward, the fastening member 22 compresses the pushing member 23. Therefore, when the external force F is removed, the pushing member 23 immediately releases a compression energy and pushes the fastening member 22 toward the center of the sliding tube 21. Due to the second surface 212b facing outward and having the inclination angle and the elastic force of the elastic member 25, the sliding tube 21 is caused to move along a direction away from the tool receiving space S. When the first blocking portion 213 of the sliding tube 21 abuts against the first abutting surface 15 again, the sliding tube 21 returns to the first position P1 shown in FIG. 4.

It can be seen from the above description that on the basis of the tool holder 100 fastening the tool shank 200, a method of releasing the tool shank 200 is to apply the external force F to the sliding tube 21 to cause the sliding tube 21 to move from the first position P1 to the second position P2, wherein the fastening member 22 is pushed radially outward by the second surface 212b of the sliding tube 21, so that the tool shank 200 could be easily withdrawn relative to the tool holder 100. After the external force F is removed, the sliding tube 21 automatically returns from the second position P2 to the first position P1 due to the compression energy released by the elastic member 25, so that the tool shank 200 could be subsequently inserted and fastened again for use. Similarly, when the tool shank 200 is about to be inserted into the tool holder 100, only the external force F is required to be applied to push the sliding tube 21 to the second position P2, so that the pull stud 203 of the tool shank 200 could be easily inserted into the counterbore 211 of the sliding tube 21; after removing the external force F, the tool shank 200 is fastened again by the tool fastening assembly 20.

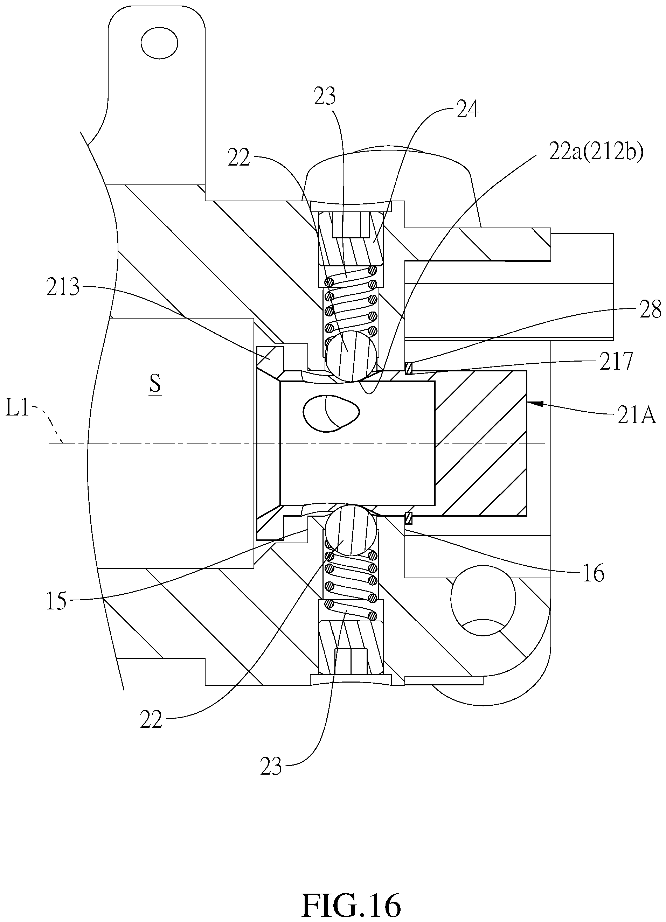

In the current embodiment, the sliding tube 21 is moved from the second position P2 to the first position P1 by the elastic member 25 releasing the compression energy and deforming. However, in other embodiments, when a sum of the elastic force of the pushing members 23 is enough to push the fastening member 22 to tightly abut against the second surface 212b having the inclined angle and to push the sliding tube 21 to the first position P1, the elastic member 25 could be omitted, and hence the gasket 26 and the C-shaped retaining ring 27 could be jointly omitted as shown in FIG. 16. In addition, referring to FIG. 16, an outer peripheral surface of a body of a sliding tube 21A further has a restricting portion 28 at a predetermined position. When the restricting portion 28 abuts against the second abutting surface 16, the external force F could no longer push the sliding tube 21A to move toward the tool receiving space S, so that the sliding tube 21A could be prevented from excessively moving and an ideal contact position between the fastening member 22 and the second surface 212b could be ensured. The restricting portion 28 could be a C-shaped retaining ring clamping a slot 217 on an outer peripheral surface of the sliding tube 21A as an example. Similarly, the restricting portion 28 could also be applied to the structure of the sliding tube 21 shown in FIG. 1 to FIG. 15.

It is worth mentioning that, the purpose of the first angle θ1 of the first surface 212a and the second angle θ2 of the second surface 212b of the side opening 212 of the sliding tube 21 is to ensure that a structure of the sliding tube 21 corresponding to the aforementioned structures could maintain a predetermined thickness, thereby preventing damages caused by the moving fastening member 22 due to the thickness being too thin. In addition, the fastening member 22, the pushing member 23, and the closing member 24 are jointly received in the same through hole 13, thereby being conducive to quickly disassembling and easily replacing and maintaining.

## Claims

1. A tool holder (100) for receiving and fastening a tool shank (200) on a tool magazine, comprising:
a socket (10) having an axial hole (12), at least one through hole (13), and a tool receiving space (S) adapted to receive the tool shank (200), wherein the axial hole (12) axially communicates with the tool receiving space (S); the at least one through hole (13) radially communicates with the axial hole (12); an axis (L1) passing through the tool receiving space (S) and a center of the axial hole (12) is defined; and
a tool fastening assembly (20) comprising a sliding tube (21, 21A) and at least one fastening member (22), wherein the sliding tube (21, 21A) is disposed in the axial hole (12) and is movable between a first position (P1) and a second position (P2) in the axis (L1); the sliding tube (21, 21A) has at least one side opening (212), wherein a hole wall of the at least one side opening (212) comprises a first surface (212a) and a second surface (212b); a virtual line (L2) parallel to the axis (L1) is defined; a first extension line (L3) extending outward from the first surface (212a) is defined, and a first angle (θ1) is formed between the first extension line (L3) and the virtual line (L2); a second extension line (L4) extending outward from the second surface (212b) is defined, and a second angle (θ2) is formed between the second extension line (L4) and the virtual line (L2); the first angle (θ1) is greater than the second angle (θ2); the at least one fastening member (22) is movably disposed in the at least one through hole (13) of the socket (10); when the sliding tube (21, 21A) is located at the first position (P1), the at least one fastening member (22) is in contact with the first surface (212a) of the sliding tube (21, 21A), and the tool shank (200) is fastened and is located in the tool receiving space (S); when the sliding tube (21, 21A) is located at the second position (P2), the at least one fastening member (22) is in contact with the second surface (212b) of the sliding tube (21, 21A), and the tool shank (200) is released and is configured to be withdrawn from the tool receiving space (S).

2. The tool holder (100) as claimed in claim 1, wherein the tool fastening assembly (20) comprises at least one closing member (24) and at least one pushing member (23); the at least one closing member (24) covers the at least one through hole (13) of the socket (10); the at least one pushing member (23) is disposed in the at least one through hole (13) of the socket (10), wherein two ends of the at least one pushing member (23) respectively abut against the at least one closing member (24) and the at least one fastening member (22).

3. The tool holder (100) as claimed in claim 2, wherein an end of the tool shank (200) has a pull stud (203); the fastening member (22) has a curved protrusion (22a); when the sliding tube (21, 21A) is located at the first position (P1), the curved protrusion (22a) of the at least one fastening member (22) is in contact with the first surface (212a) of the sliding tube (21, 21A) and the pull stud (203) and is located between the first surface (212a) and the pull stud (203).

4. The tool holder (100) as claimed in claim 3, wherein the sliding tube (21, 21A) has a counterbore (211) located on the axis (L1) and having an open end (211a) and a closed end (211b); the at least one side opening (212) communicates with the counterbore (211); the pull stud (203) enters and exits the counterbore (211) through the open end (211a).

5. The tool holder (100) as claimed in claim 1, wherein the tool fastening assembly (20) comprises at least one elastic member (25); an elastic force of the at least one elastic member (25) urges the sliding tube (21, 21A) to keep moving toward the first position (P1).

6. The tool holder (100) as claimed in claim 5, wherein the socket (10) has a first abutting surface (15) and a second abutting surface (16) respectively located on two sides of the at least one through hole (13); an end of the sliding tube (21, 21A) has a first blocking portion (213), and another end of the sliding tube (21, 21A) has a second blocking portion; when the first blocking portion (213) abuts against the first abutting surface (15), the sliding tube (21, 21A) is located at the first position (P1); the at least one elastic member (25) fits around the sliding tube (21, 21A), wherein an end of the at least one elastic member (25) abuts against the second abutting surface (16), and another end of the at least one elastic member (25) abuts against the second blocking portion.

7. The tool holder (100) as claimed in claim 1, wherein the first angle (θ1) ranges between 45 degrees and 80 degrees, and the second angle (θ2) ranges between 10 degrees and 40 degrees.

8. The tool holder (100) as claimed in claim 1, wherein the first surface (212a) of the sliding tube (21, 21A) is a curved surface having a R radius; the at least one fastening member (22) is a steel ball; the R radius is greater than or equal to a radius of the steel ball.

9. The tool holder (100) as claimed in claim 8, wherein the R radius ranges between 2 mm and 7 mm.

10. The tool holder (100) as claimed in claim 1, wherein the socket (10) has a first abutting surface (15) and a second abutting surface (16) respectively located on two sides of the at least one through hole (13); an end of the sliding tube (21, 21A) has a first blocking portion (213); a body of the sliding tube (21, 21A) has a restricting portion (28); when the first blocking portion (213) abuts against the first abutting surface (15), the sliding tube (21, 21A) is located at the first position (P1); when the restricting portion (28) abuts against the second abutting surface (16), the sliding tube (21, 21A) is located at the second position (P2).

11. A method of releasing the tool shank (200) in the tool holder (100) as claimed in claim 1, comprising steps of:
applying an external force (F) to the sliding tube (21, 21A) to cause the sliding tube (21, 21A) to move from the first position (P1) to the second position (P2), wherein the second surface (212b) of the sliding tube (21, 21A) pushes the at least one fastening member (22) radially outward;
withdrawing the tool shank (200) relative to the tool holder (100); and
removing the external force (F) to cause the sliding tube (21, 21A) to return from the second position (P2) to the first position (P1).

## Amended claims

### Amended claims in accordance with Rule 137(2) EPC.

1. A tool holder (100) for receiving and fastening a tool shank (200) on a tool magazine, comprising:
a socket (10) having an axial hole (12), at least one through hole (13), and a tool receiving space (S) adapted to receive the tool shank (200), wherein the axial hole (12) axially communicates with the tool receiving space (S); the at least one through hole (13) radially communicates with the axial hole (12); an axis (L1) passing through the tool receiving space (S) and a center of the axial hole (12) is defined; and
a tool fastening assembly (20) comprising a sliding tube (21, 21A) and at least one fastening member (22), wherein the sliding tube (21, 21A) is disposed in the axial hole (12) and is movable between a first position (P1) and a second position (P2) in the axis (L1); the sliding tube (21, 21A) has a counterbore (211) and at least one side opening (212), wherein a hole wall of the at least one side opening (212) comprises a first surface (212a) and a second surface (212b); a virtual line (L2) parallel to the axis (L1) is defined; a first extension line (L3) passes through an intersection of the first surface (212a) with an outer tube surface of the sliding tube (21) and through an intersection of the first surface (212a) with a hole wall of the counterbore (211), and a first angle (θ1), which is an acute angle, is formed between the first extension line (L3) and the virtual line (L2); a second extension line (L4) passes through an intersection of the second surface (212b) with the outer tube surface of the sliding tube (21) and through an intersection of the second surface (212b) with the hole wall of the counterbore (211), and a second angle (θ2), which is an acute angle, is formed between the second extension line (L4) and the virtual line (L2);
**characterized in that** the first angle (θ1) is greater than the second angle (θ2); the at least one fastening member (22) is movably disposed in the at least one through hole (13) of the socket (10); when the sliding tube (21, 21A) is located at the first position (P1), the at least one fastening member (22) is in contact with the first surface (212a) of the sliding tube (21, 21A), and the tool shank (200) is fastened and is located in the tool receiving space (S); when the sliding tube (21, 21A) is located at the second position (P2), the at least one fastening member (22) is in contact with the second surface (212b) of the sliding tube (21, 21A), and the tool shank (200) is released and is configured to be withdrawn from the tool receiving space (S).

2. The tool holder (100) as claimed in claim 1, wherein the tool fastening assembly (20) comprises at least one closing member (24) and at least one pushing member (23); the at least one closing member (24) covers the at least one through hole (13) of the socket (10); the at least one pushing member (23) is disposed in the at least one through hole (13) of the socket (10), wherein two ends of the at least one pushing member (23) respectively abut against the at least one closing member (24) and the at least one fastening member (22).

3. The tool holder (100) as claimed in claim 2, wherein an end of the tool shank (200) has a pull stud (203); the fastening member (22) has a curved protrusion (22a); when the sliding tube (21, 21A) is located at the first position (P1), the curved protrusion (22a) of the at least one fastening member (22) is in contact with the first surface (212a) of the sliding tube (21, 21A) and the pull stud (203) and is located between the first surface (212a) and the pull stud (203).

4. The tool holder (100) as claimed in claim 3, wherein the counterbore (211) is located on the axis (L1) and has an open end (211a) and a closed end (211b); the at least one side opening (212) communicates with the counterbore (211); the pull stud (203) enters and exits the counterbore (211) through the open end (211a).

5. The tool holder (100) as claimed in claim 1, wherein the tool fastening assembly (20) comprises at least one elastic member (25); an elastic force of the at least one elastic member (25) urges the sliding tube (21, 21A) to keep moving toward the first position (P1).

6. The tool holder (100) as claimed in claim 5, wherein the socket (10) has a first abutting surface (15) and a second abutting surface (16) respectively located on two sides of the at least one through hole (13); an end of the sliding tube (21, 21A) has a first blocking portion (213), and another end of the sliding tube (21, 21A) has a second blocking portion; when the first blocking portion (213) abuts against the first abutting surface (15), the sliding tube (21, 21A) is located at the first position (P1); the at least one elastic member (25) fits around the sliding tube (21, 21A), wherein an end of the at least one elastic member (25) abuts against the second abutting surface (16), and another end of the at least one elastic member (25) abuts against the second blocking portion.

7. The tool holder (100) as claimed in claim 1, wherein the first angle (θ1) ranges between 45 degrees and 80 degrees, and the second angle (θ2) ranges between 10 degrees and 40 degrees.

8. The tool holder (100) as claimed in claim 1, wherein the first surface (212a) of the sliding tube (21, 21A) is a curved surface having a R radius; the at least one fastening member (22) is a steel ball; the R radius is greater than or equal to a radius of the steel ball.

9. The tool holder (100) as claimed in claim 8, wherein the R radius ranges between 2 mm and 7 mm.

10. The tool holder (100) as claimed in claim 1, wherein the socket (10) has a first abutting surface (15) and a second abutting surface (16) respectively located on two sides of the at least one through hole (13); an end of the sliding tube (21, 21A) has a first blocking portion (213); a body of the sliding tube (21, 21A) has a restricting portion (28); when the first blocking portion (213) abuts against the first abutting surface (15), the sliding tube (21, 21A) is located at the first position (P1); when the restricting portion (28) abuts against the second abutting surface (16), the sliding tube (21, 21A) is located at the second position (P2).

11. A method of releasing the tool shank (200) in the tool holder (100) as claimed in claim 1, comprising steps of:
applying an external force (F) to the sliding tube (21, 21A) to cause the sliding tube (21, 21A) to move from the first position (P1) to the second position (P2), wherein the second surface (212b) of the sliding tube (21, 21A) pushes the at least one fastening member (22) radially outward;
withdrawing the tool shank (200) relative to the tool holder (100); and
removing the external force (F) to cause the sliding tube (21, 21A) to return from the second position (P2) to the first position (P1).
